# EUROPEAN PATENT SPECIFICATION

(11) **EP 2 960 822 B1**
(45) Date of publication and mention of the grant of the patent: **27.03.2019**
(21) Application number: 15163242.9
(22) Date of filing: 10.04.2015
(51) Int. Cl.: G06F 21/62, G06F 21/32

(54) **METHOD AND DEVICE FOR LOCKING FILE**
VERFAHREN UND VORRICHTUNG ZUM SPERREN EINER DATEI
PROCÉDÉ ET DISPOSITIF POUR VERROUILLER DES FICHIERS

(30) Priority: 26.06.2014 CN 201410299232
(43) Date of publication of application: 30.12.2015
(73) Proprietor: Xiaomi Inc., Beijing 100085 (CN)
(72) Inventor: Tang, Mingyong, 100085 Beijing (CN); Liu, Huayijun, 100085 Beijing (CN); Zhou, Zhinong, 100085 Beijing (CN)
(74) Representative: Underwood, Nicolas Patrick

(56) References cited:
- WO-A1-2013/155224
- CN-A- 103 413 072
- CN-A- 103 699 847
- CN-A- 103 826 046
- US-A1- 2014 115 725

## Description

### TECHNICAL FIELD

The present invention generally relates to the field of electric devices, and more particularly, to a method and a device for locking a file.

### BACKGROUND

Nowadays, personal mobile terminals on the market, such as cellphones, usually have privacy features, and users need to lock their cellphones to protect their personal privacy. Currently, general locking manners include numeric password, pattern, fingerprint recognition and the like. Fingerprint recognition technology brings the users more and more convenience, and the fingerprint recognition technology is relatively reliable in terms of guaranteeing security and privacy of the users. However, the cellphone of a user may be taken by other people in an unlocked state, thus the privacy of the user cannot be guaranteed.

Documents WO 2013/155224, CN 103 826 046, and CN 103 413 072 disclose known methods for locking files or for acquiring user information. CN103699847 A discloses to encrypt a file using fingerprint information.

### SUMMARY

In order to overcome the problems existing in the related art, the present invention provides a method and a device for locking a file according to claims 1 and 7 and the further embodiments of the dependent claims.

An embodiment provides a computer program which, when executing on a processor of a terminal, performs the method for locking a file according to claims 1-6.

This program can use any programming language and take the form of source code, object code or a code intermediate between source code and object code, such as a partially compiled form, or any other desirable form.

Technical solutions provided by the embodiments of the present invention may produce the following advantageous effects:

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments being consistent with the invention and, together with the description, serve to explain the principles of the invention.
Fig. 1 is a flow chart showing a method for locking a file, according to an exemplary embodiment.
Fig. 2 is a flow chart showing a method for locking a file, according to a non-claimed example.
Fig. 2a is a diagram illustrating an interface when a mobile terminal outputs a first photographing shutter option.
Fig. 2b is a diagram illustrating an interface of a file being in a locked state, which is output by a mobile terminal.
Fig. 2c is a diagram illustrating an interface of a mobile terminal when a fingerprint recognition photographing function is on.
Fig. 2d is a diagram illustrating an interface of a mobile terminal when a fingerprint recognition photographing function is off.
Fig. 3 is a flow chart showing a method for locking a file, according to a non-claimed example.
Fig. 3a is a diagram illustrating an interface of a copying option and a locking option output by a mobile terminal.
Fig. 4 is a flow chart showing a method for locking a file, according to an exemplary embodiment.
Fig. 4a is a detailed flow chart of step S401 in Fig. 4.
Fig. 4b is a diagram illustrating an interface when a mobile terminal outputs a voice control shutter option.
Fig. 5 is a flow chart showing a method for locking a file, according to a non-claimed example.
Fig. 5a is a detailed flow chart of step S501 in Fig. 5.
Fig. 5b is a diagram illustrating an interface when a mobile terminal outputs a third photographing shutter option.
Fig. 6 is a block diagram illustrating a device for locking a file, according to an exemplary embodiment.
Fig. 7 is a block diagram illustrating a device for locking a file, according to a non-claimed example.
Fig. 8 is a block diagram illustrating a device for locking a file, according to an exemplary embodiment.
Fig. 9 is a block diagram illustrating a device for locking a file, according to an exemplary embodiment.
Fig. 10 is a block diagram illustrating a device for locking a file, according to a non-claimed example.
Fig. 11 is a block diagram illustrating a device for locking a file, according to an exemplary embodiment.
Fig. 12 is a block diagram illustrating a device for locking a file, according to an exemplary embodiment.

### DETAILED DESCRIPTION

Exemplary embodiments will be described in details herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the present invention. On the contrary, they are only examples of devices and methods that are consistent with some aspects of the present invention as recited in the claims.

Biological feature recognition technology identifies a personal identity by using intrinsic physiological characteristics of a human body through closely combining a computer with hi-tech means such as optical, acoustic, biological sensors and the principle of biostatistics, and so on. Currently, there are various different kinds of recognition methods such as fingerprint recognition, iris recognition, facial recognition, palmprint recognition, voiceprint recognition, vein recognition, or brainwave recognition. The method and device for locking a file of the present invention use the biological feature recognition technology to realize the function of locking a first designated file, thereby protecting personal privacy of a user.

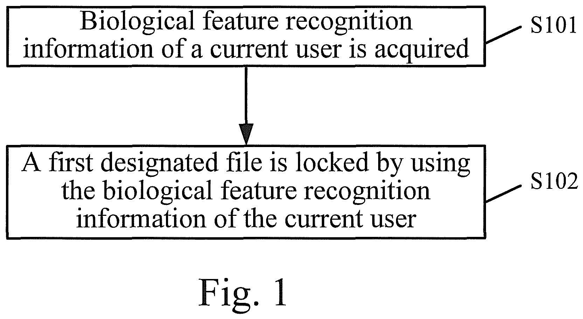

Fig. 1 is a flow chart showing a method for locking a file, according to an exemplary embodiment. The method for locking the file is applied in a terminal. As shown in Fig. 1, the method includes the following steps.

In step S101, biological feature recognition information of a current user is acquired.

The biological feature recognition information may include fingerprint information, voiceprint information, iris information or facial information.

In step S102, a first designated file is locked by using the biological feature recognition information of the current user.

The first designated file may be a picture or a video, or may be other types of files such as text information, which is not limited by the present invention.

In a practical application, the current user (such as the owner of a mobile terminal) does not want other user groups than the user herself/himself to view certain files such as pictures or videos within the mobile terminal. Therefore, the current user needs to lock the first designated file such as the picture or the video, to protect personal privacy of the current user. Since the biological feature recognition information has uniqueness, the method for locking the file of the present embodiment may effectively lock the first designated file, to protect the personal privacy of the current user.

In the embodiments of the present invention, the designated file is locked by using the biological feature recognition information of the user, such that users other than the current user cannot perform operations such as seeing, modifying or the like on the locked designated file, in this way, the personal privacy of the current user may be effectively protected, and user experience is improved. Moreover, the user may choose which file to be locked as needed, which is flexible in use.

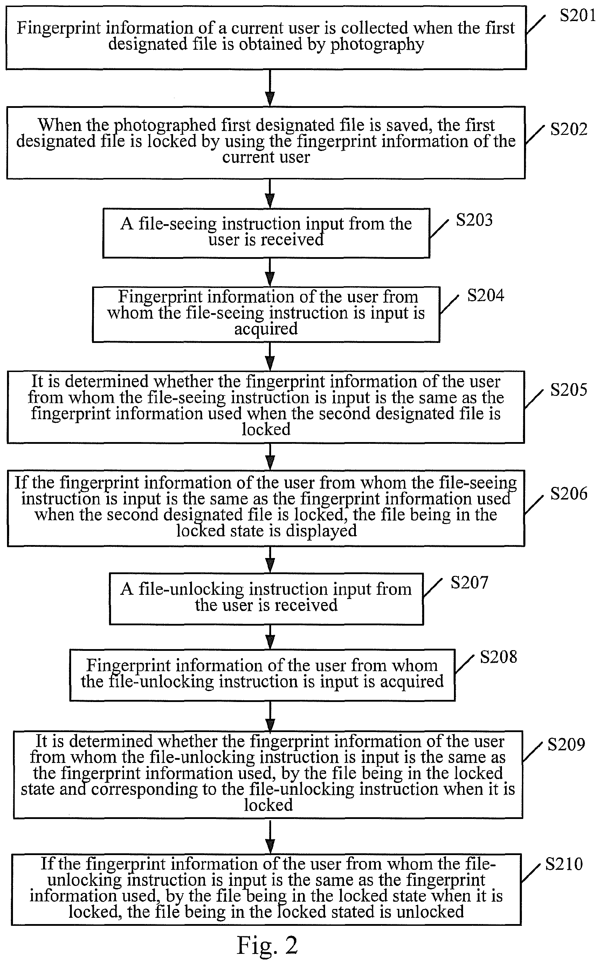

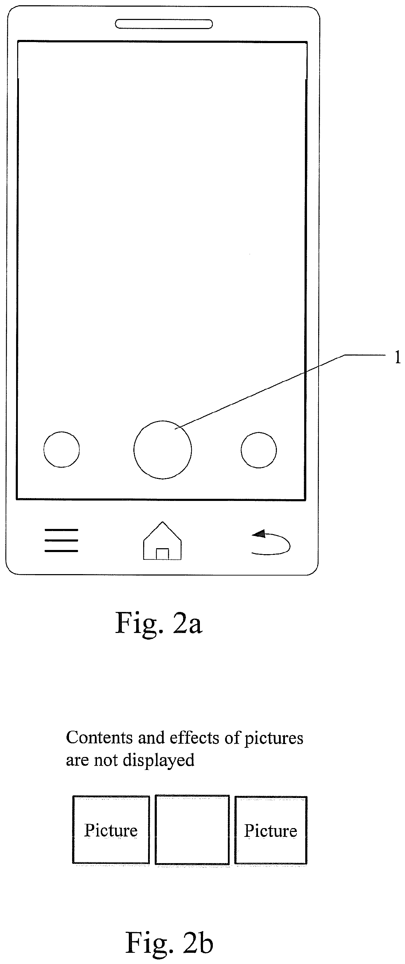

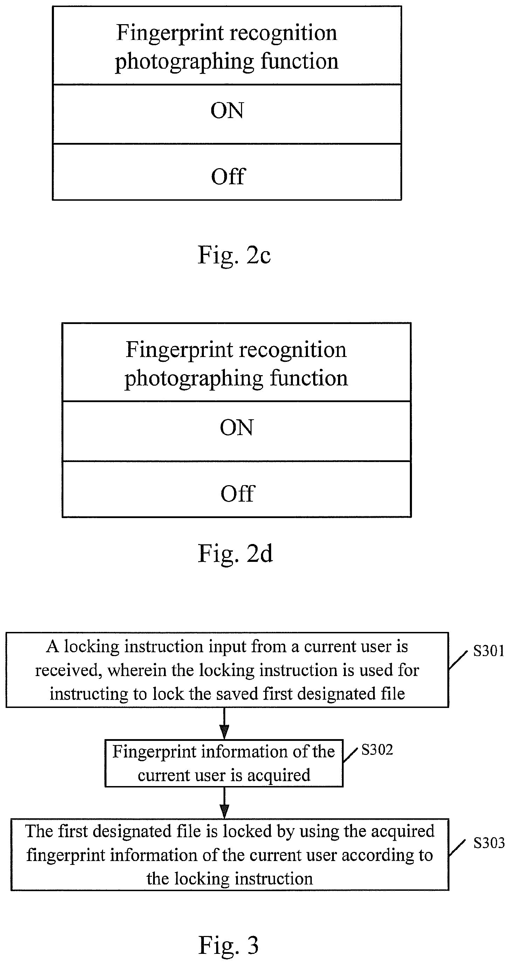

Fig. 2 is a flow chart showing a method for locking a file, according to an exemplary non-claimed embodiment. In the embodiment shown in Fig. 2, taking biological feature recognition information being fingerprint information, and a first designated file being a file to be photographed as an example, the embodiment of the present invention will be explained in detail. As shown in Fig. 2, the method for locking the file is applied in a terminal, and the method includes the following steps.

In step S201, fingerprint information of a current user is collected when the first designated file is obtained by photography.

In an implementation of the present embodiment, the step S201 may include:

receiving a first photographing instruction input from the current user through a touchscreen and collecting fingerprint information when the first photographing instruction is input from the current user through the touchscreen, wherein the first photographing instruction is used for instructing to obtain the first designated file by photography. The first designated file may be a picture or a video (i.e. a picture file or a video file, the video file comprising frames having been photographed).

Fig. 2a shows a practical application of the step S201. As shown in Fig. 2a, when a camera module within the mobile terminal is started, the mobile terminal outputs a first photographing shutter option 1, and the blank area on the top of the mobile terminal in Figs. 2a-2b is an image collecting area, which is to be omitted herein. When the first photographing shutter option 1 is clicked by the user through the touchscreen, the mobile terminal may receive the first photographing instruction input from the current user, and then photograph a picture or a video. Meanwhile, when the first photographing shutter option 1 is clicked by the user through the touchscreen, the mobile terminal may collect fingerprint information of the current user at the same time.

It is to be explained that, in the implementation shown in Fig. 2a, receiving the first photographing instruction of the user and collecting the fingerprint information of the user may be performed at the same time, thereby operation steps of the user may be simplified, and user time may be saved. However, in other implementations of the step S201, the mobile terminal may also output a fingerprint collection option after the first photographing instruction input from the user is received, and collect the fingerprint information of the user by the fingerprint collection option. Or, the mobile terminal of the user may also output the fingerprint collection option when the camera module is started, and then output the first photographing shutter option 1 for the user to input the first photographing instruction after the fingerprint of the user is collected by the fingerprint collection option.

After the fingerprint information of the current user is collected, the fingerprint information may be saved within the mobile terminal, for comparison when the file is seen, viewed or unlocked (see the following steps S203-S210).

In step S202, when the photographed first designated file is saved, the first designated file is locked by using the fingerprint information of the current user.

In a practical application of the terminal, the first photographing shutter option 1 of the touchscreen is clicked by the current user, thereby the first photographing instruction is issued. At this time, the touchscreen receives the first photographing instruction, and acquires the fingerprint information of the current user at the same time. When a picture or a video is saved after the picture is taken or the video is recorded, the picture or the video is locked by using the fingerprint information of the current user. After the first designated file is locked, the first designated file is in a locked state, and the locked state may include an invisible hidden state, a modification-forbidding state, a deletion-forbidding state or a viewing-forbidding state. What kind of operations are specifically limited by the locked state may be set by system default of the mobile terminal, or may be set by the user.

In step S203, a file-seeing instruction input from the user is received.

The file-seeing instruction is used for instructing to see a second designated file or a designated folder, wherein the second designated file is a file being in a locked state, and the second designated file may be a file that is obtained after the steps S201-S202 are performed (i.e., the first designated file). The designated folder contains the file being in the locked state, for example, the file that is obtained after the steps S201-S202 are performed (i.e., the first designated file).

For example, the file-seeing instruction may be a folder-viewing instruction. The file-seeing instruction may be received through the touchscreen.

In an implementation of the present embodiment, the locked state is the viewing-forbidding state.

In step S204, fingerprint information of the user from whom the file-seeing instruction is input is acquired.

In the step S204, the fingerprint information may be acquired by the touchscreen at the same time the file-seeing instruction is input from the user. Or, when the file-seeing instruction is input from the user, a fingerprint collection option may be output to collect a fingerprint of the user.

In step S205, it is determined whether the fingerprint information of the user from whom the file-seeing instruction is input is the same as the fingerprint information used when the second designated file is locked.

In step S206, if the fingerprint information of the user from whom the file-seeing instruction is input is the same as the fingerprint information used when the second designated file is locked, the file being in the locked state is displayed.

Displaying the file being in the locked state means, displaying the file that is locked by using the fingerprint information of the user from whom the file-seeing instruction is input.

If the fingerprint information of the user from whom the file-seeing instruction is input is different from the fingerprint information used when the second designated file is locked, contents of the file being in the locked state are not displayed.

During the implementation, if the locked state is the viewing-forbidding state, as shown in Fig. 2b, a picture being in the viewing-forbidding state is displayed to be blank (in other implementations, it may be displayed using a designated identifier), and other users cannot see contents of the picture or the video. When the locked state is the invisible hidden state, the mobile terminal will not display any information of the picture (including the previous blank and the designated identifier), and will completely hide the picture.

The embodiments of the present invention may also provide a function option switch by which on/off of the function of locking the file by using the biological feature recognition information is set by the user. As shown in Fig. 2c, when submenu of a biological feature recognition photographing function indicates that the fingerprint recognition photographing function is on, the method according to the present embodiment is performed. As shown in Fig. 2d, when the fingerprint recognition photographing function is off, the picture or the video is photographed in a general mode (that is, the fingerprint of the user is not collected, and the photographed picture and video are directly saved to a set position).

In step S207, a file-unlocking instruction input from the user is received.

The file-unlocking instruction is used for instructing to unlock the locked state of the second designated file or the designated folder, wherein the second designated file is the file being in the locked state, and the second designated file may be the file that is obtained after the steps S201-S202 are performed (i.e., the first designated file). The designated folder contains the file being in the locked state, for example, the file that is obtained after the steps S201-S202 are performed (i.e., the first designated file).

In step S208, fingerprint information of the user from whom the file-unlocking instruction is input is acquired.

In step S209, it is determined whether the fingerprint information of the user from whom the file-unlocking instruction is input is the same as the fingerprint information used by the file being in the locked state and corresponding to the file-unlocking instruction when it is locked.

In step S210, if the fingerprint information of the user from whom the file-unlocking instruction is input is the same as the fingerprint information used by the file being in the locked state when it is locked, the file being in the locked stated is unlocked.

If the fingerprint information of the user from whom the file-unlocking instruction is input is different from the fingerprint information used by the file being in the locked state when it is locked, the unlocking operation is not performed, and prompt information may be output, for example, the fingerprint information is not matched.

After the file being in the locked state is unlocked, for example, after the picture or the video being in the locked state is unlocked, the picture or video is in an open state. When other users click to enter a picture or video management folder, the picture or the video may be viewed without validating the fingerprint information.

It is to be explained that, the steps S201-S202, the steps S203-S206 and the steps S207-S210 may be performed regardless of the order presented above, i.e. in another order.

In the examples, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the examples further provide the method for seeing and viewing the second designated file or the designated folder, and the method for unlocking the second designated file or the designated folder. Thereby, additional functions of the method for locking the file are more complete, and the user experience is improved.

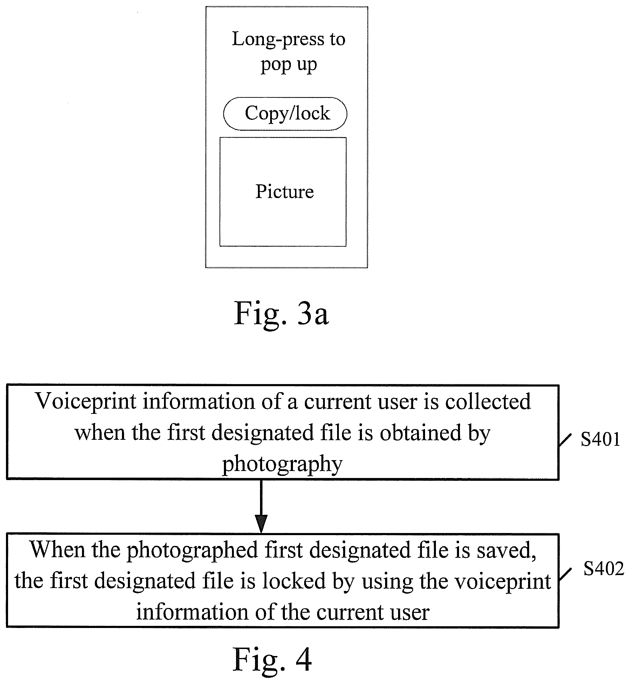

Fig. 3 is a flow chart showing a method for locking a file, according to an exemplary non-claimed embodiment. In the embodiment shown in Fig. 2, a locking method is described in detail, wherein a first designated file is a file to be photographed. The first designated file may also be a file saved in a mobile terminal. As shown in Fig. 3, a method for locking the saved first designated file will be explained below. The method for locking the file is applied in a terminal. As shown in Fig. 3, the method includes the following steps.

In step S301, a locking instruction input from a current user is received, wherein the locking instruction is used for instructing to lock the saved first designated file.

In a practical application, the locking instruction may be a long-press instruction. The mobile terminal determines whether the locking instruction is received by detecting time during which a corresponding area of the file is touched, and when the locking instruction is received, the first designated file corresponding to the locking instruction is locked.

When the file saved in the mobile terminal is viewed by the user, for example, as shown in Fig. 3a, when Album is viewed by the user, a picture in the Album may be long-pressed by the user, and the mobile terminal outputs copying, locking or unlocking options or other function options after the instruction is received, and then the function option is clicked by the user as needed, thereby settings of the picture are achieved.

In step S302, fingerprint information of the current user is acquired.

That is, fingerprint information of the user from whom the locking instruction is input is acquired.

In step S303, the first designated file is locked by using the acquired fingerprint information of the current user according to the locking instruction.

After the first designated file is locked, the first designated file is in a locked state. The locked state includes an invisible hidden state, a modification-forbidding state, a deletion-forbidding state or a viewing-forbidding state.

After the file is locked, other operations of the user are the same as the steps S203-S206 and/or S207-S210, detailed description will be omitted herein.

It is to be explained that, in the present embodiment, the example in which the first designated file is locked by using the fingerprint information is described, however, in other embodiments, the first designated file may also be locked by using other biological feature recognition information such as voiceprint information, iris information or facial information.

In the embodiments, the designated file (the saved file) is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use.

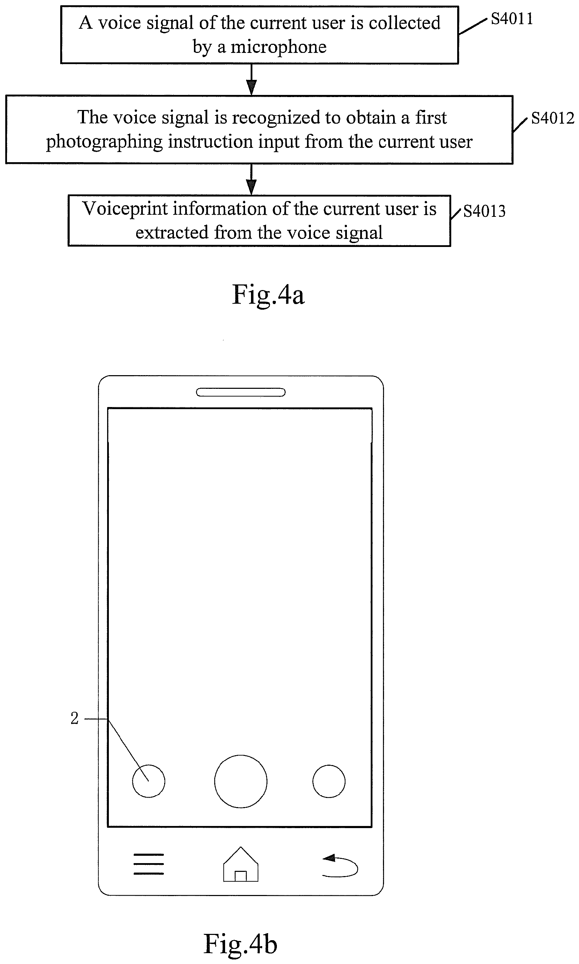

Fig. 4 is a flow chart showing a method for locking a file, according to an exemplary embodiment. The method for locking the file shown in Fig. 4 is substantively the same as the locking method shown in Fig. 2, except that the method for locking the file shown in Fig. 4 will be explained in detail, taking biological feature recognition information being voiceprint information, and a first designated file being a file to be photographed as an example. The method for locking the file is applied in a terminal. As shown in Fig. 4, the method includes the following steps.

In step S401, voiceprint information of a current user is collected when the first designated file is obtained by photography.

In an implementation of the present embodiment, as shown in Fig. 4a, the step S401 may include the following steps.

In step S4011, a voice signal of the current user is collected by a microphone.

In step S4012, the voice signal is recognized to obtain a first photographing instruction input from the current user, wherein the first photographing instruction is used for instructing to obtain the first designated file by photography. The first designated file may be a picture or video format.

In step S4013, voiceprint information of the current user is extracted from the voice signal.

The voiceprint information of the current user extracted from the voice signal is saved within a mobile terminal as the biological feature recognition information, for comparison when the file is seen, viewed or unlocked.

Fig. 4b shows a practical application of this step. As shown in Fig. 4b, when a camera module within the mobile terminal is started, the mobile terminal outputs a voice control shutter option 2, and after the voice control shutter option 2 is clicked by the current user through a touchscreen and "start photographing" is spoken out by the current user, the mobile terminal receives the voice signal by the microphone, obtains the first photographing instruction by analysis and recognition, and then photographs a picture or a video. Meanwhile, the mobile terminal receives the voice signal, and extracts the voiceprint information of the current user therefrom.

In step S402, when the photographed file of first designated file is saved, the first designated file is locked by using the voiceprint information of the current user.

When a picture or a video is saved after the picture is taken or the video is recorded, the picture or the video is locked by using the voiceprint information of the current user. In the following steps, the first designated file is locked by using the voiceprint information, and method and process for seeing and unlocking the file in the following steps are substantively the same as the steps S203-S206 and S207-S210 respectively, which will not be redundantly described herein.

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the embodiments of the present invention further provide the method for seeing and viewing the second designated file or the designated folder, and the method for unlocking the second designated file or the designated folder. Thereby, additional functions of the method for locking the file are more complete, and the user experience is improved.

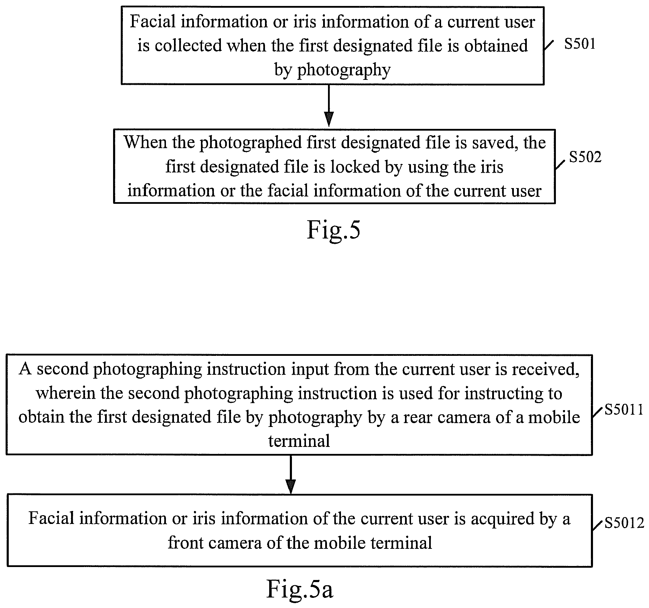

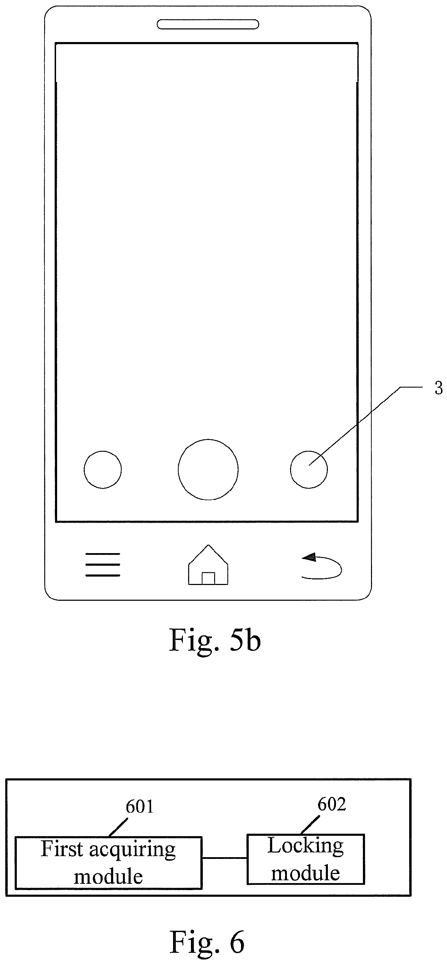

Fig. 5 is a flow chart showing a method for locking a file, according to an exemplary non-claimed embodiment. The method for locking the file shown in Fig. 5 is substantively the same as the method for locking the file shown in Fig. 2, except that in the embodiment shown in Fig. 5, biological feature recognition information being facial information or iris information, and a first designated file being a file to be photographed will be explained in detail as an example. As shown in Fig. 5, the method may include the following steps.

In step S501, facial information or iris information of a current user is collected when the first designated file is obtained by photography.

In an implementation of the present embodiment, as shown in Fig. 5a, the step S501 may include the following steps.

In step S5011, a second photographing instruction input from the current user is received, wherein the second photographing instruction is used for instructing to obtain the first designated file by photography by a rear camera of a mobile terminal. The first designated file is a picture or video format.

In step S5012, facial information or iris information of the current user is acquired by a front camera of the mobile terminal.

Fig. 5b shows a practical application of this step. As shown in Fig. 5b, when a camera module within the mobile terminal is started, the mobile terminal outputs a third photographing shutter option 3, and when the third photographing shutter option 3 is clicked by the user through a touchscreen, the mobile terminal receives the second photographing instruction input from the current user, thereby starts the rear camera to obtain the first designated file by photography. Meanwhile, the mobile terminal also starts the front camera to photograph and acquire the facial information or the iris information of the current user.

In step S502, when the photographed first designated file is saved, the first designated file is locked by using the iris information or the facial information of the current user.

When a picture or a video is saved after the picture is taken or the video is recorded, the picture or the video is locked by using the iris information or the facial information of the current user. Method and process for seeing and unlocking the file in the following steps are substantively the same as the steps S203-S206 and S207-S210 respectively, which will not be redundantly described herein.

In the example, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the example provides the method for seeing and viewing the second designated file or the designated folder, and the method for unlocking the second designated file or the designated folder. Thereby, additional functions of the method for locking the file are more complete, and the user experience is improved.

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use.

Fig. 6 is a block diagram illustrating a device for locking a file, according to an exemplary embodiment of the present invention. The device may be a mobile terminal such as a smart phone or a tablet PC. As shown in Fig. 6, the device includes a first acquiring module 601 and a locking module 602.

The first acquiring module 601 is configured to acquire biological feature recognition information of a current user, wherein the biological feature recognition information includes fingerprint information, voiceprint information, iris information or facial information.

The locking module 602 is configured to lock a first designated file by using the biological feature recognition information of the current user acquired by the first acquiring module 601.

The first designated file may be a picture or a video, or may be other types of files such as text information, which is not limited by the present invention.

In a practical application, the current user does not want other user groups than the user herself/himself to view certain files such as pictures or videos within the mobile terminal. Therefore, the current user needs to lock the first designated file such as the picture or the video, to protect personal privacy of the current user. Since the biological feature recognition information has uniqueness, the device for locking the file of the present embodiment may effectively lock the first designated file, to protect the personal privacy of the current user.

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use.

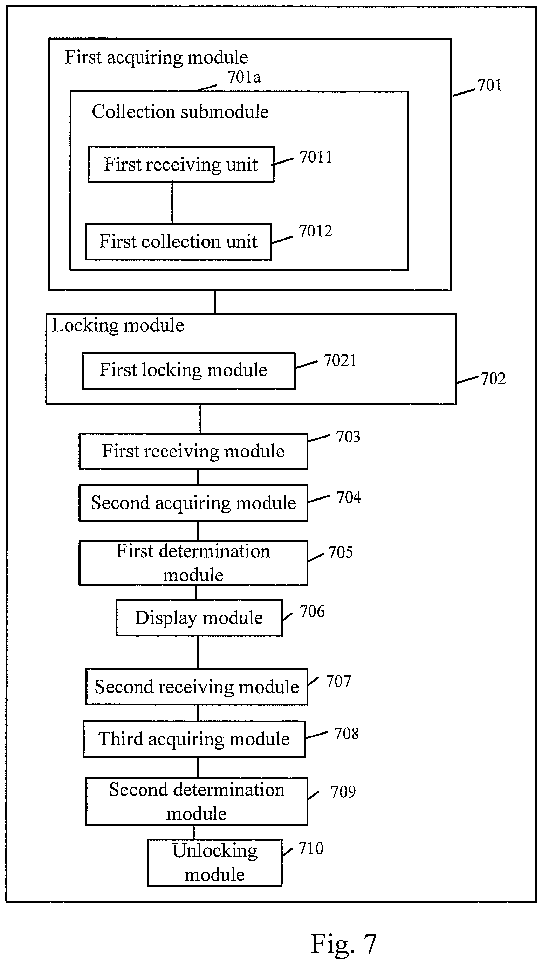

Fig. 7 is a block diagram illustrating a device for locking a file, according to an exemplary non-claimed embodiment. In the embodiment shown in Fig. 7, taking biological feature recognition information being fingerprint information, and a first designated file being a file to be photographed as an example, the embodiment of the present invention will be explained in detail. As shown in Fig. 7, the device includes a first acquiring module 701 and a locking module 702.

The first acquiring module 701 is configured to acquire fingerprint information of a current user. The locking module 702 is configured to lock the first designated file by using the fingerprint information of the current user acquired by the first acquiring module 701.

Wherein the first acquiring module 701 includes a collection submodule 701a configured to collect the fingerprint information of the current user when the first designated file is obtained by photography.

In an implementation of the present embodiment, when the biological feature recognition information is fingerprint information, the collection submodule 701a includes a first receiving unit 7011 and a first collection unit 7012. The first receiving unit 7011 is configured to receive a first photographing instruction input from the current user through a touchscreen, wherein the first photographing instruction is used for instructing to obtain the first designated file by photography. The first designated file may be a picture or video format. The first collection unit 7012 is configured to collect fingerprint information when the first photographing instruction is input from the current user through the touchscreen. The first photographing instruction is used for instructing to obtain the first designated file by photography.

Further, the locking module 702 includes a first locking unit 7021. The first locking unit 7021 is configured to, when the photographed first designated file is saved, lock the first designated file by using the fingerprint information of the current user.

After the first designated file is locked, the first designated file is in a locked state, and the locked state includes an invisible hidden state, a modification-forbidding state, a deletion-forbidding state or a viewing-forbidding state.

Furthermore, in order to realize a function of seeing and viewing the file being in the locked state, of the device, the device further includes a first receiving module 703, a second acquiring module 704, a first determination module 705 and a display module 706.

The first receiving module 703 is configured to receive a file-seeing instruction input from the user, wherein the file-seeing instruction is used for instructing to see a second designated file or a designated folder, the second designated file is a file being in a locked state, and the designated folder contains the file being in the locked state.

The second acquiring module 704 is configured to acquire fingerprint information of the user from whom the file-seeing instruction is input.

The first determination module 705 is configured to determine whether the fingerprint information acquired by the second acquiring module 704 is the same as the fingerprint information used when the second designated file is locked.

The display module 706 is configured to, if the fingerprint information acquired by the second acquiring module 704 is the same as the fingerprint information used by the file being in the locked state when it is locked, display the file being in the locked state, and configured to, if the fingerprint information acquired by the second acquiring module 704 is different from the fingerprint information used by the file being in the locked state when it is locked, not display contents of the file being in the locked state.

The examples may also provide a function option switch by which on/off of the function of locking the file by using the biological feature recognition information is set by the user.

Further, in order to realize the function of unlocking the file being in the locked state, of the device, the device may further include a second receiving module 707, a third acquiring module 708, a second determination module 709 and an unlocking module 710.

The second receiving module 707 is configured to receive a file-unlocking instruction input from the user, wherein the file-unlocking instruction is used for instructing to unlock a locked state of a second designated file or a designated folder, the second designated file is a file being in a locked state, and the designated folder contains the file being in the locked state.

The third acquiring module 708 is configured to acquire fingerprint information of the user from whom the file-unlocking instruction is input.

The second determination module 709 is configured to determine whether the fingerprint information of the user acquired by the third acquiring module 708 is the same as the fingerprint information used by the file being in the locked state and corresponding to the file-unlocking instruction when it is locked.

The unlocking module 710 is configured to, if the fingerprint information of the user acquired by the third acquiring module 708 is the same as the fingerprint information used by the file being in the locked state when it is locked, unlock the file being in the locked state.

If the fingerprint information of the user from whom the file-unlocking instruction is input is different from the fingerprint information used by the file being in the locked state when it is locked, the unlocking operation is not performed, and prompt information may be output, for example, the fingerprint information is not matched.

After the file being in the locked state is unlocked, for example, after the picture or the video being in the locked state is unlocked, the picture or video is in an open state. When other users click to enter a picture or video management folder, the picture or the video may be viewed without validating the fingerprint information.

In the examples, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the example further provides the structure module for seeing and viewing the second designated file or the designated folder, and the structure module for unlocking the second designated file or the designated folder. Thereby, additional module functions of the device for locking the file are more complete, and the user experience is improved.

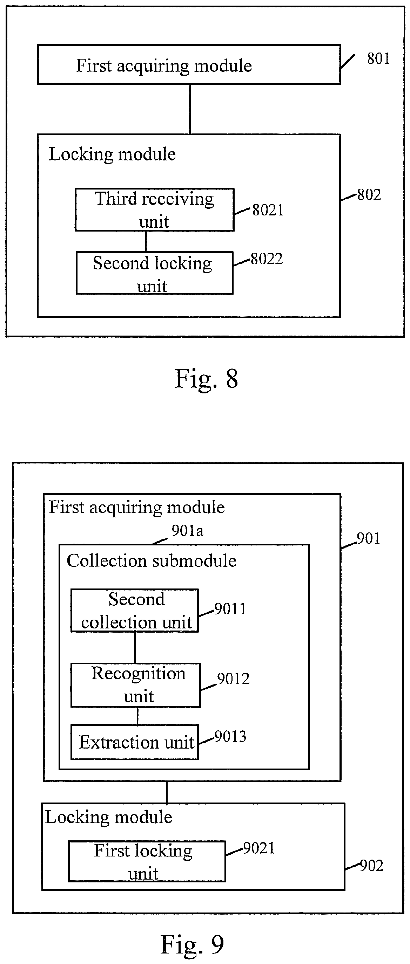

Fig. 8 is a block diagram illustrating a device for locking a file, according to an exemplary embodiment. The device may lock a file that is saved within a mobile terminal by using fingerprint information. The device includes a first acquiring module 801 and a locking module 802. The first acquiring module 801 is configured to acquire biological feature recognition information of a current user, wherein the biological feature recognition information includes fingerprint information, voiceprint information, iris information or facial information. The locking module 802 is configured to lock a first designated file by using the biological feature recognition information of the current user acquired by the first acquiring module 801.

Further, the locking module 802 may include a third receiving unit 8021 and a second locking unit 8022.

The third receiving unit 8021 is configured to receive a locking instruction input from the current user, wherein the locking instruction is used for instructing to lock the saved first designated file.

In a practical application, the locking instruction may be a long-press instruction. The mobile terminal determines whether the locking instruction is received by detecting time during which a corresponding area of the file is touched, and when the locking instruction is received, the first designated file corresponding to the locking instruction is locked.

When the file saved in the mobile terminal is viewed by the user, for example, when Album is viewed by the user, a picture in the Album may be long-pressed by the user, and the mobile terminal outputs copying, locking or unlocking options or other function options after the instruction is received, and then the function option is clicked by the user as needed, thereby settings of the picture is achieved.

The second locking unit 8022 is configured to lock the first designated file by using the biological feature recognition information of the current user according to the locking instruction.

After the first designated file is locked, the first designated file is in a locked state. The locked state includes an invisible hidden state, a modification-forbidding state, a deletion-forbidding state or a viewing-forbidding state.

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use.

Fig. 9 is a block diagram illustrating a device for locking a file, according to an exemplary embodiment. The device for locking the file shown in Fig. 9 is substantively the same as the locking device shown in Fig. 7, except that in the embodiment shown in Fig. 9, biological feature recognition information being voiceprint information, and a first designated file being a file to be photographed will be explained in detail as an example.

As shown in Fig. 9, the device includes a first acquiring module 901 and a locking module 902. The first acquiring module 901 is configured to acquire voiceprint information of a current user. The locking module 902 is configured to lock the first designated file by using the voiceprint information of the current user acquired by the first acquiring module 901.

The first acquiring module includes a collection submodule 901a. The collection submodule 901a is configured to collect the voiceprint information of the current user when the first designated file is obtained by photography.

Further, the collection submodule 901a includes a second collection unit 9011, a recognition unit 9012 and an extraction unit 9013.

The second collection unit 9011 is configured to collect a voice signal of the current user by a microphone.

The recognition unit 9012 is configured to recognize the voice signal to obtain a first photographing instruction input from the current user, wherein the first photographing instruction is used for instructing to obtain the first designated file by photography.

The extraction unit 9013 is configured to extract the voiceprint information of the current user from the voice signal.

The voiceprint information of the current user extracted from the voice signal is saved within a mobile terminal as the biological feature recognition information, for comparison when the file is seen, viewed or unlocked.

When a picture or a video is saved after the picture is taken or the video is recorded, the picture or the video is locked by using the voiceprint information of the current user. In the following steps, the first designated file is locked by using the voiceprint information, however, other function modules for seeing, viewing and unlocking the file are substantively the same as the embodiment shown in Fig. 7, which will not be redundantly described herein.

In the embodiments of the present invention, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the present invention further provides the structure module for seeing and viewing the second designated file or the designated folder, and the structure module for unlocking the second designated file or the designated folder. Thereby, additional module functions of the device for locking the file are more complete, and the user experience is improved.

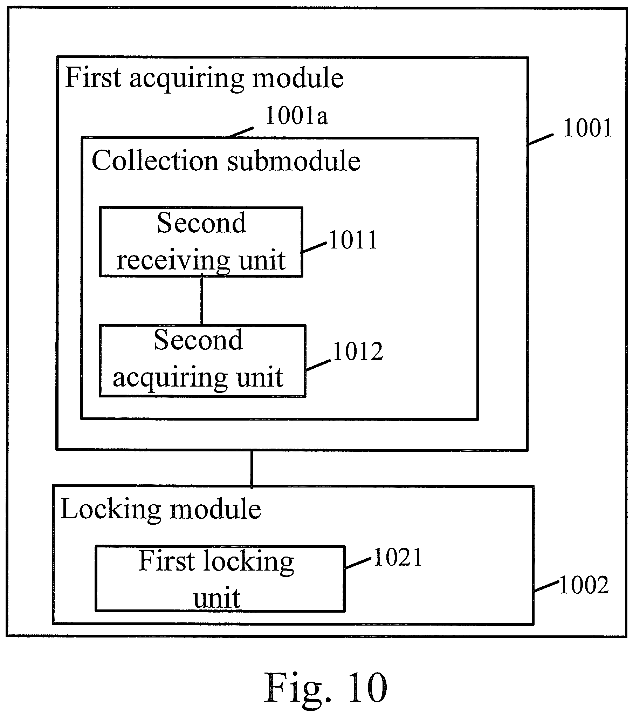

Fig. 10 is a block diagram illustrating a device for locking a file, according to an exemplary non-claimed embodiment. The device for locking the file shown in Fig. 10 is substantively the same as the device for locking the file shown in Fig. 7, except that in the embodiment shown in Fig. 10, biological feature recognition information being facial information or iris information, and a first designated file being a file to be photographed will be explained in detail as an example.

As shown in Fig. 10, the device includes a first acquiring module 1001 and a locking module 1002. The first acquiring module 1001 is configured to acquire iris information or facial information of a current user. The locking module 1002 is configured to lock the first designated file by using the iris information or facial information of the current user acquired by the first acquiring module 1001.

The first acquiring module 1001 includes a collection submodule 1001a. The collection submodule 1001a is configured to collect the facial information or the iris information of the current user when the first designated file is obtained by photography.

Further, the collection submodule 1001a includes a second receiving unit 1011 and a second acquiring unit 1012.

The second receiving unit 1011 is configured to receive a second photographing instruction input from the current user, wherein the second photographing instruction is used for instructing to obtain the first designated file by photography by a rear camera of a mobile terminal. The first designated file may be a picture or a video.

The second acquiring unit 1012 is configured to acquire the facial information or the iris information of the current user by a front camera of the mobile terminal.

When a picture or a video is saved after the picture is taken or the video is recorded, the picture or the video is locked by using the facial information or the iris information of the current user. Other structure function modules for seeing and unlocking the file are substantively the same as the example shown in Fig. 7, which will not be redundantly described herein.

In the examples, the designated file is locked by using the biological feature recognition information of the user, such that users other than the current user cannot perform operations such as seeing, modifying or the like on the locked designated file, in this way, personal privacy of the current user may be effectively protected, and user experience is improved. Moreover, the user may choose which file to be locked as needed, which is flexible in use. In addition, the example further provides the structure module for seeing and viewing the second designated file or the designated folder, and the structure module for unlocking the second designated file or the designated folder. Thereby, additional module functions of the device for locking the file are more complete, and the user experience is improved.

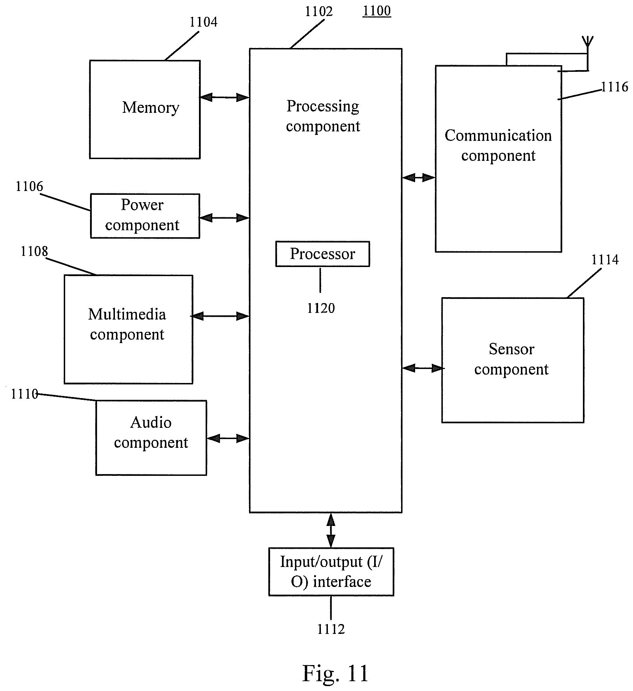

Fig. 11 is a block diagram illustrating a device 1100 for locking a file, according to an exemplary embodiment. For example, the device 1100 may be a mobile phone, a computer, a digital broadcast terminal, a messaging device, a gaming console, a tablet device, a medical device, exercise equipment, a personal digital assistant and the like.

As shown in Fig. 11, the device 1100 may include one or more of the following components: a processing component 1102, a storage 1104, a power component 1106, a multimedia component 1108, an audio component 1110, an input/output (I/O) interface 1112, a sensor component 1114, and a communication component 1116.

The processing component 1102 usually controls the overall operations of the device 1100, such as the operations associated with display, telephone calls, data communications, camera operations, and recording operations. The processing component 1102 may include one or more processors 1120 to execute instructions to perform all or a part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The storage 1104 is configured to store various types of data to support the operations of the device 1100. Examples of such data include instructions for any application or method operated on the device 1100, contact data, phonebook data, messages, pictures, videos, etc. The storage 1104 may be implemented by using any type of volatile or non-volatile memory devices or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1106 provides power to the respective components of the device 1100. The power component 1106 may include a power management system, one or more power sources, and components associated with the generation, management, and distribution of power for the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touchscreen to receive input signals from the user. The touch panel includes one or more touch sensors to sense touches, swipes, and gestures on the touch panel. The touch sensors may not only sense a boundary of a touch or swipe action, but also sense a duration of time and a pressure associated with the touch or swipe action. In some embodiments, the multimedia component 1108 includes a front camera and/or a rear camera. The front camera and/or the rear camera may receive external multimedia data while the device 1100 is in an operation mode such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive external audio signals when the device 1100 is in an operation mode such as a call mode, a recording mode and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, a button, and the like. The button may include, but not limited to, a home page button, a volume button, a starting button, and a locking button.

The sensor component 1114 includes one or more sensors to provide status assessments of respective aspects of the device 1100. For example, the sensor component 1114 may detect an open/closed status of the device 1100, relative positioning of components, for example, the display and the keyboard of the device 1100, a position change of the device 1100 or of a component of the device 1100, a presence or absence of a user contacting with the device 1100, an orientation or an acceleration/deceleration of the device 1100, and a temperature change of the device 1100. The sensor component 1114 may include a proximity sensor configured to detect the presence of nearby objects without any physical contact. The sensor component 1114 may also include a light sensor such as a CMOS or CCD image sensor for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, by wire or wirelessly, between the device 1100 and other devices. The device 1100 may access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 may further include a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there also provides a non-transitory computer readable storage medium including instructions, such as the storage 1104 including the instructions executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal may execute a method for locking a file, including:
acquiring biological feature recognition information of a current user, wherein the biological feature recognition information includes fingerprint information, voiceprint information, iris information or facial information; and
locking a first designated file by using the biological feature recognition information of the current user.

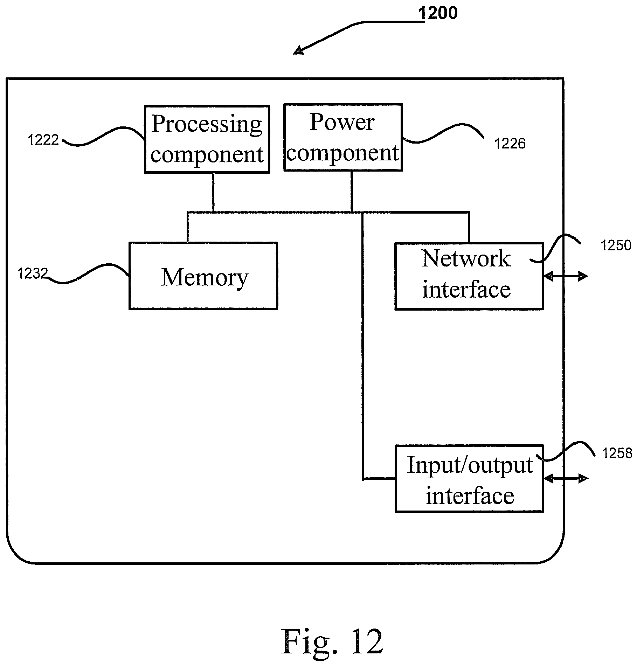

Fig. 12 is a block diagram illustrating a device 1200 for locking a file, according to an exemplary embodiment. For example, the device 1200 may be provided as a server. As shown in Fig. 12, the device 1200 includes a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions, to perform the methods for locking the file.

The device 1200 may further include a power component 1226 configured to perform power management of the device 1200, a wired or wireless network interface 1250 configured to connect the device 1200 to a network and an input/output (I/O) interface 1258. The device 1200 may operate based on an operating system stored in the memory 1232, such as Windows ServerTM, Mac OS XTM, UnixTM, LinuxTM, FreeBSDTM, or the like.

After considering this description and carrying out the embodiments disclosed herein, those skilled in the art may anticipate other implementation aspects of the present invention. The present invention is meant to cover any variations, usage or adaptive change of these embodiments, and these variations, usage or adaptive change follow general concept of the present invention and include the common knowledge or the customary technical means in the technical field that is not disclosed in the present invention. The description and embodiments are only exemplary, and the real range of the present invention are defined by the following claims.

It should be understood that the present invention is not limited to precise structures that are described above and shown in the accompanying drawings, and may be modified and changed without departing from the range of the present invention. The scope of the present invention is only defined by the appended claims.

## Claims

1. A method for locking a file, wherein the method comprises:
acquiring (S101) biological feature recognition information of a current user, wherein the biological feature recognition information comprises voiceprint information; and
locking (S102) a first designated file by using the biological feature recognition information of the current user, wherein the first designated file is a file to be obtained by photography, and acquiring the biological feature recognition information of the current user comprises:
collecting the biological feature recognition information of the current user when the first designated file is obtained by photography, and
collecting the biological feature recognition information of the current user when the first designated file is obtained by photography comprises:
collecting (S4011) a voice signal of the current user by a microphone;
recognizing (S4012) the voice signal to obtain a first photographing instruction input from the current user, wherein the first photographing instruction is used for instructing to obtain the first designated file by photography; and
extracting (S4013) the voiceprint information of the current user from the voice signal.

2. The method according to claim 1, wherein locking the first designated file by using the biological feature recognition information of the current user comprises:
when the photographed first designated file is saved, locking the first designated file by using the biological feature recognition information of the current user.

3. The method according to claim 1, wherein locking the first designated file by using the biological feature recognition information of the current user comprises:
receiving a locking instruction input from the current user, wherein the locking instruction is used for instructing to lock the saved first designated file; and
locking the first designated file by using the biological feature recognition information of the current user according to the locking instruction.

4. The method according to claim 1, wherein after the first designated file is locked, the first designated file is in a locked state, and the locked state comprises an invisible hidden state, a modification-forbidding state, a deletion-forbidding state or a viewing-forbidding state.

5. The method according to claim 1, wherein the method further comprises:
receiving a file-seeing instruction input from the user, wherein the file-seeing instruction is used for instructing to see a second designated file or a designated folder, the second designated file is a file being in a locked state, and the designated folder contains the file being in the locked state;
acquiring the biological feature recognition information of the user from whom the file-seeing instruction is input;
determining whether the biological feature recognition information of the user from whom the file-seeing instruction is input is the same as the biological feature recognition information used by the file being in the locked state when it is locked; and
if the biological feature recognition information of the user from whom the file-seeing instruction is input is the same as the biological feature recognition information used by the file being in the locked state when it is locked, displaying the file being in the locked state.

6. The method according to claim 1, wherein the method further comprises:
receiving a file-unlocking instruction input from the user, wherein the file-unlocking instruction is used for instructing to unlock a locked state of a second designated file or a designated folder, the second designated file is a file being in a locked state, and the designated folder contains the file being in the locked state;
acquiring the biological feature recognition information of the user from whom the file-unlocking instruction is input;
determining whether the biological feature recognition information of the user from whom the file-unlocking instruction is input is the same as the biological feature recognition information used by the file being in the locked state and corresponding to the file-unlocking instruction when it is locked;
if the biological feature recognition information of the user from whom the file-unlocking instruction is input is the same as the biological feature recognition information used by the file being in the locked state when it is locked, unlocking the file being in the locked state.

7. A device for locking a file, wherein the device comprises:
a processor (1120);
a memory (1104) for storing instructions executed by the processor,
wherein the processor is configured to perform the method according to any one of claim 1 to 6.

8. A computer program, which when executing on a processor of a terminal, performs a method according to any one of claims 1-6.

## Patentansprüche

1. Verfahren zum Sperren einer Datei, wobei das Verfahren umfasst:
Aufnehmen (S101) von Informationen zur Erkennung biologischer Merkmale eines aktuellen Benutzers, wobei die Informationen zur Erkennung biologischer Merkmale Stimmabdruckinformationen umfassen, und
Sperren (S102) einer ersten bestimmten Datei unter Verwendung der Informationen zur Erkennung biologischer Merkmale des aktuellen Benutzers, wobei die erste bestimmte Datei eine durch Fotografie zu erhaltende Datei ist und das Aufnehmen der Informationen zur Erkennung biologischer Merkmale des aktuellen Benutzers umfasst:
Erfassen der Informationen zur Erkennung biologischer Merkmale des aktuellen Benutzers, wenn die erste bestimmte Datei durch Fotografie erhalten wird, wobei
das Erfassen der Informationen zur Erkennung biologischer Merkmale des aktuellen Benutzers, wenn die erste bestimmte Datei durch Fotografie erhalten wird, umfasst:
Erfassen (S4011) eines Sprachsignals des aktuellen Benutzers durch ein Mikrofon,
Erkennen (S4012) des Sprachsignals, um eine erste Fotografieranweisung zu erhalten, die von dem aktuellen Benutzer eingegeben wird, wobei die erste Fotografieranweisung verwendet wird, um den Erhalt der ersten bestimmten Datei durch Fotografie anzuweisen, und
Extrahieren (S4013) der Stimmabdruckinformationen des aktuellen Benutzers aus dem Sprachsignal.

2. Verfahren nach Anspruch 1, wobei das Sperren der ersten bestimmten Datei unter Verwendung der Informationen zur Erkennung biologischer Merkmale des aktuellen Benutzers umfasst:
wenn die fotografierte erste bestimmte Datei gespeichert ist, Sperren der ersten bestimmten Datei unter Verwendung der Informationen zur Erkennung biologischer Merkmale des aktuellen Benutzers.

3. Verfahren nach Anspruch 1, wobei das Sperren der ersten bestimmten Datei unter Verwendung der Informationen zur Erkennung biologischer Merkmale des aktuellen Benutzers umfasst:
Empfangen einer Sperranweisung, die von dem aktuellen Benutzer eingegeben wird, wobei die Sperranweisung verwendet wird, um das Sperren der gespeicherten ersten bestimmten Datei anzuweisen, und
Sperren der ersten bestimmten Datei unter Verwendung der Informationen zur Erkennung biologischer Merkmale des aktuellen Benutzers gemäß der Sperranweisung.

4. Verfahren nach Anspruch 1, wobei sich die erste bestimmte Datei, nachdem die erste bestimmte Datei gesperrt wurde, in einem gesperrten Zustand befindet und der gesperrte Zustand einen unsichtbaren verborgenen Zustand, einen Modifikation verbietenden Zustand, einen Löschung verbietenden Zustand oder einen Ansicht verbietenden Zustand umfasst.

5. Verfahren nach Anspruch 1, wobei das Verfahren ferner umfasst:
Empfangen einer Dateibetrachtungsanweisung, die von dem Benutzer eingegeben wird, wobei die Dateibetrachtungsanweisung verwendet wird, um das Betrachten einer zweiten bestimmten Datei oder eines bestimmten Ordners anzuweisen, die zweite bestimmte Datei eine Datei ist, die sich in einem gesperrten Zustand befindet, und der bestimmte Ordner die Datei enthält, die sich in dem gesperrten Zustand befindet,
Aufnehmen der Informationen zur Erkennung biologischer Merkmale des Benutzers, von dem die Dateibetrachtungsanweisung eingegeben wird,
Bestimmen, ob die Informationen zur Erkennung biologischer Merkmale des Benutzers, von dem die Dateibetrachtungsanweisung eingegeben wird, dieselben sind wie die Informationen zur Erkennung biologischer Merkmale, die von der Datei verwendet werden, die sich in dem gesperrten Zustand befindet, wenn sie gesperrt ist, und
wenn die Informationen zur Erkennung biologischer Merkmale des Benutzers, von dem die Dateibetrachtungsanweisung eingegeben wird, dieselben sind wie die Informationen zur Erkennung biologischer Merkmale, die von der Datei verwendet werden, die sich in dem gesperrten Zustand befindet, wenn sie gesperrt ist, Anzeigen der Datei, die sich in dem gesperrten Zustand befindet.

6. Verfahren nach Anspruch 1, wobei das Verfahren ferner umfasst:
Empfangen einer Dateientsperranweisung, die von dem Benutzer eingegeben wird, wobei die Dateientsperranweisung verwendet wird, um das Entsperren eines gesperrten Zustands einer zweiten bestimmten Datei oder eines bestimmten Ordners anzuweisen, die zweite bestimmte Datei eine Datei ist, die sich in einem gesperrten Zustand befindet, und der bestimmte Ordner die Datei enthält, die sich in dem gesperrten Zustand befindet,
Aufnehmen der Informationen zur Erkennung biologischer Merkmale des Benutzers, von dem die Dateientsperranweisung eingegeben wird,
Bestimmen, ob die Informationen zur Erkennung biologischer Merkmale des Benutzers, von dem die Dateientsperranweisung eingegeben wird, dieselben sind wie die Informationen zur Erkennung biologischer Merkmale, die von der Datei verwendet werden, die sich in dem gesperrten Zustand befindet und der Dateientsperranweisung entsprechen, wenn sie gesperrt ist, und
wenn die Informationen zur Erkennung biologischer Merkmale des Benutzers, von dem die Dateientsperranweisung eingegeben wird, dieselben sind wie die Informationen zur Erkennung biologischer Merkmale, die von der Datei verwendet werden, die sich in dem gesperrten Zustand befindet, wenn sie gesperrt ist, Entsperren der Datei, die sich in dem gesperrten Zustand befindet.

7. Vorrichtung zum Sperren einer Datei, wobei die Vorrichtung umfasst:
einen Prozessor (1120),
einen Speicher (1104) zum Speichern von Anweisungen, die von dem Prozessor ausgeführt werden,
wobei der Prozessor dazu ausgestaltet ist, das Verfahren nach einem der Ansprüche 1 bis 6 auszuführen.

8. Computerprogramm, welches, wenn es von einem Prozessor eines Endgeräts ausgeführt wird, ein Verfahren nach einem der Ansprüche 1-6 ausführt.

## Revendications

1. Procédé de verrouillage de fichier, dans lequel le procédé comprend les étapes ci-dessous consistant à :
acquérir (S101) des informations de reconnaissance de caractéristiques biologiques d'un utilisateur en cours, dans lequel les informations de reconnaissance de caractéristiques biologiques comprennent des informations d'empreinte vocale ; et
verrouiller (S102) un premier fichier désigné en utilisant les informations de reconnaissance de caractéristiques biologiques de l'utilisateur en cours, dans lequel le premier fichier désigné correspond à un fichier devant être obtenu par photographie, et dans lequel l'étape d'acquisition des informations de reconnaissance de caractéristiques biologiques de l'utilisateur en cours comprend l'étape ci-dessous consistant à :
collecter les informations de reconnaissance de caractéristiques biologiques de l'utilisateur en cours lorsque le premier fichier désigné est obtenu par photographie ; et
dans lequel l'étape de collecte des informations de reconnaissance de caractéristiques biologiques de l'utilisateur en cours lorsque le premier fichier désigné est obtenu par photographie comprend les étapes ci-dessous consistant à :
collecter (S4011) un signal vocal de l'utilisateur en cours au moyen d'un microphone ;
reconnaître (S4012) le signal vocal en vue d'obtenir une première instruction de photographie appliquée en entrée par l'utilisateur en cours, dans lequel la première instruction de photographie est utilisée en vue de donner instruction d'obtenir le premier fichier désigné par photographie ; et
extraire (S4013), du signal vocal, les informations d'empreinte vocale de l'utilisateur en cours.

2. Procédé selon la revendication 1, dans lequel l'étape de verrouillage du premier fichier désigné en utilisant les informations de reconnaissance de caractéristiques biologiques de l'utilisateur en cours comprend l'étape ci-dessous consistant à :
lorsque le premier fichier désigné photographié est enregistré, verrouiller le premier fichier désigné en utilisant les informations de reconnaissance de caractéristiques biologiques de l'utilisateur en cours.

3. Procédé selon la revendication 1, dans lequel l'étape de verrouillage du premier fichier désigné en utilisant les informations de reconnaissance de caractéristiques biologiques de l'utilisateur en cours comprend les étapes ci-dessous consistant à :
recevoir une instruction de verrouillage appliquée en entrée par l'utilisateur en cours, dans lequel l'instruction de verrouillage est utilisée en vue de donner instruction de verrouiller le premier fichier désigné enregistré ; et
verrouiller le premier fichier désigné en utilisant les informations de reconnaissance de caractéristiques biologiques de l'utilisateur en cours conformément à l'instruction de verrouillage.

4. Procédé selon la revendication 1, dans lequel, dès lors que le premier fichier désigné est verrouillé, le premier fichier désigné est dans un état verrouillé, et l'état verrouillé comprend un état caché invisible, un état d'interdiction de modification, un état d'interdiction de suppression ou un état d'interdiction de visualisation.

5. Procédé selon la revendication 1, dans lequel le procédé comprend en outre les étapes ci-dessous consistant à :
recevoir une instruction de consultation de fichier appliquée en entrée par l'utilisateur, dans lequel l'instruction de consultation de fichier est utilisée en vue de donner instruction de consulter un second fichier désigné ou un dossier désigné, dans lequel le second fichier désigné correspond à un fichier qui est dans un état verrouillé, et le dossier désigné contient le fichier qui est dans l'état verrouillé ;
acquérir les informations de reconnaissance de caractéristiques biologiques de l'utilisateur à partir duquel l'instruction de consultation de fichier est appliquée en entrée ;
déterminer si les informations de reconnaissance de caractéristiques biologiques de l'utilisateur à partir duquel l'instruction de consultation de fichier est appliquée en entrée sont identiques aux informations de reconnaissance de caractéristiques biologiques utilisées par le fichier dans l'état verrouillé lorsque celui-ci est verrouillé ; et
si les informations de reconnaissance de caractéristiques biologiques de l'utilisateur à partir duquel l'instruction de consultation de fichier est appliquée en entrée sont identiques aux informations de reconnaissance de caractéristiques biologiques utilisées par le fichier qui est dans l'état verrouillé lorsque celui-ci est verrouillé, afficher le fichier qui est dans l'état verrouillé.

6. Procédé selon la revendication 1, dans lequel le procédé comprend en outre les étapes ci-dessous consistant à :
recevoir une instruction de déverrouillage de fichier appliquée en entrée par l'utilisateur, dans lequel l'instruction de déverrouillage de fichier est utilisée en vue de donner instruction de déverrouiller un état verrouillé d'un second fichier désigné ou d'un dossier désigné, dans lequel le second fichier désigné correspond à un fichier qui est dans un état verrouillé, et le dossier désigné contient le fichier qui est dans l'état verrouillé ;
acquérir les informations de reconnaissance de caractéristiques biologiques de l'utilisateur à partir duquel l'instruction de déverrouillage de fichier est appliquée en entrée ;
déterminer si les informations de reconnaissance de caractéristiques biologiques de l'utilisateur à partir duquel l'instruction de déverrouillage de fichier est appliquée en entrée sont identiques aux informations de reconnaissance de caractéristiques biologiques utilisées par le fichier qui est dans l'état verrouillé et correspond à l'instruction de déverrouillage de fichier lorsque celui-ci est verrouillé ;
si les informations de reconnaissance de caractéristiques biologiques de l'utilisateur à partir duquel l'instruction de déverrouillage de fichier est appliquée en entrée sont identiques aux informations de reconnaissance de caractéristiques biologiques utilisées par le fichier qui est dans l'état verrouillé lorsque celui-ci est verrouillé, déverrouiller le fichier qui est dans l'état verrouillé.

7. Dispositif destiné à verrouiller un fichier, dans lequel le dispositif comprend
un processeur (1120) ;
une mémoire (1104) destinée à stocker des instructions exécutées par le processeur ;
dans lequel le processeur est configuré de manière à mettre en oeuvre le procédé selon l'une quelconque des revendications 1 à 6.

8. Programme informatique qui, lorsqu'il est exécuté sur un processeur d'un terminal, met en oeuvre un procédé selon l'une quelconque des revendications 1 à 6.
